# EUROPÄISCHE PATENTSCHRIFT

(11) **EP 3 019 769 B1**
(45) Veröffentlichungstag und Bekanntmachung des Hinweises auf die Patenterteilung: **04.04.2018**
(21) Anmeldenummer: 14741508.7
(22) Anmeldetag: 23.06.2014
(51) Int. Cl.: F16F 15/12, F16F 15/123

(54) **FLANSCH**
FLANGE
BRIDE

(30) Priorität: 09.07.2013 DE 102013213411
(43) Veröffentlichungstag der Anmeldung: 18.05.2016
(73) Patentinhaber: Schaeffler Technologies AG & Co. KG, 91074 Herzogenaurach (DE)
(72) Erfinder: JUNKER, Uli, 77652 Offenburg (DE); MENDE, Hartmut, 77815 Bühl (DE)
(86) Internationale Anmeldenummer: PCT/DE2014/200278
(87) Internationale Veröffentlichungsnummer: WO 2015/003702

(56) Entgegenhaltungen:
- EP-A1- 0 062 397
- DE-A1- 4 239 610
- DE-A1- 4 406 015
- US-A1- 2012 190 462

## Beschreibung

Die Erfindung betrifft einen Flansch, insbesondere für einen Drehschwingungsdämpfer einer Brennkraftmaschine.

Drehschwingungsdämpfer weisen im Stand der Technik ein Eingangsteil und ein Ausgangsteil auf, wobei zwischen Eingangsteil und Ausgangsteil Federn angeordnet sind, so dass das Eingangsteil gegenüber dem Ausgangsteil entgegen der Rückstellkraft der Federn verdrehbar ist.

Als Eingangs- oder Ausgangsteil oder zusätzlich zu einem dieser Bauteile wird häufig ein Flansch verwendet, welcher radial außen Zungen aufweist, welche jeweils zwischen zwei Federn eingreifen und diese bei Verdrehung beaufschlagen. Ein Flansch wird im Stand der Technik aus einem ebenen Blech gefertigt. Dabei wird die Dimensionierung des Flanschs derart vorgenommen, dass die Materialstärke so gewählt ist, dass sie für die Anforderungen in den am meisten belasteten Bereichen genügt. Dies führt jedoch dazu, dass der Flansch in Bereichen geringerer Anforderung überdimensioniert ist.

Ein Flansch ist beispielsweise aus der US 2012/190462 A1 bekannt.

Es ist die Aufgabe der Erfindung einen Flansch zu schaffen, welcher den geforderten Belastungen genügt und dennoch mit hinsichtlich des Materialbedarfs verbessert ist.

Die Aufgabe der Erfindung wird mit den Merkmalen von Anspruch 1 gelöst.

Ein Ausführungsbeispiel der Erfindung betrifft einen Flansch mit einem ringförmigen Grundkörper und nach radial außen abstehenden Zungen zur Anlage an Kraftspeichern insbesondere von Drehschwingungsdämpfern, wobei die Kontur der Zungen derart ist, dass sie im Schnitt Z-förmig ausgebildet ist. Dadurch wird im belasteten Bereich des Flanschs, dort, wo die Federn anliegen, eine Materialverstärkung erreicht, während in anderen Bereichen des Flanschs eine dünnere Materialstärke verwendet werden kann, weil dort die auftretenden Belastungen geringer sind.

Besonders vorteilhaft ist es, wenn die Z-förmige Gestalt einer Zunge dadurch gebildet wird, dass die Zunge aus einem im Wesentlichen ebenen Streifen gebildet wird, bei welchem seine beiden im Umfangsrichtung betrachtet gegenüberliegenden Kanten gegensinnig abgebogen sind. So führt das gezielte Abbiegen der Kanten zu einer Materialverstärkung in hochbelasteten Bereichen, so dass das verwendete Material, wie vorzugsweise Blechmaterial, in seiner Wandstärker reduzierbar ist.

Auch ist es vorteilhaft, wenn die gegenüberliegenden Kanten derart abgebogen sind, dass sie in axialer Richtung ausgerichtet sind. Dies erlaubt eine gerade Anlage eines Federendes an der Seitenfläche des Flanschs.

Dabei ist es auch vorteilhaft, wenn die Zunge zwischen den beiden abgekanteten Kanten derart schräg verläuft, dass zwischen der Ebene der Zunge im Bereich zwischen den beiden Kanten und zumindest einer der Kanten ein spitzer Winkel vorliegt. Dabei ist ein spitzer Winkel ein Winkel von weniger als 90°. Vorteilhaft liegt auf beiden Seiten der Zunge ein spitzer Winkel zwischen der Ebene der Zunge und der Kante vorliegt.

Erfindungsgemäß ist es vorteilhaft, wenn die Zunge ausgehend von dem ringförmigen Grundkörper des Flanschs nach radial außen einen ersten Bereich aufweist, der sich verjüngt und einen zweiten Bereich aufweist, der sich im Anschluss an den sich verjüngenden Bereich erweitert. Dadurch wird ein stabiler Übergang zwischen dem ringförmigen Grundkörper und der Zunge erzielt.

Bei einem Ausführungsbeispiel der Erfindung ist es vorteilhaft, wenn der sich verjüngende Bereich eine radiale Höhe aufweist, die im Wesentlichen zwischen dem 0,25 und 0,4 fachen der radialen Höhe der Zunge beträgt.

Auch ist es vorteilhaft wenn der sich erweiternde Bereich eine radiale Höhe aufweist, die im Wesentlichen zwischen dem 0,6 und 0,75 fachen der radialen Höhe der Zunge beträgt.

Ebenso ist es vorteilhaft, wenn der erste sich verjüngende Bereich eine maximale Breite aufweist, welche im Wesentlichen einem 3-fachen bis 5-fachen der Breite der Zunge an ihrer schmalsten Stelle entspricht.

Erfindungsgemäß ist es bei einem Ausführungsbeispiel vorteilhaft, wenn der zweite sich erweiternde Bereich eine maximale Breite aufweist, welche im Wesentlichen einem 1,5-fachen bis 2,5-fachen der Breite der Zunge an ihrer schmalsten Stelle entspricht.

Auch ist es zweckmäßig, wenn die abgebogenen Kanten sich über den ersten sich verjüngenden Bereich und den zweiten sich erweiternden Bereich erstrecken.

Die vorliegende Erfindung wird nachfolgend anhand bevorzugter Ausführungsbeispiele in Verbindung mit den zugehörigen Figuren näher erläutert:
Dabei zeigen:
   - Figur 1: eine perspektivische Ansicht eines erfindungsgemäßen Flanschs,
   - Figur 2: eine weitere perspektivische Ansicht des Flanschs,
   - Figur 3: eine Seitenansicht einer Teils des Flanschs,
   - Figur 4: eine Ansicht des Flanschs von oben, und
   - Figur 5: eine Ansicht des Flanschs von der Seite.

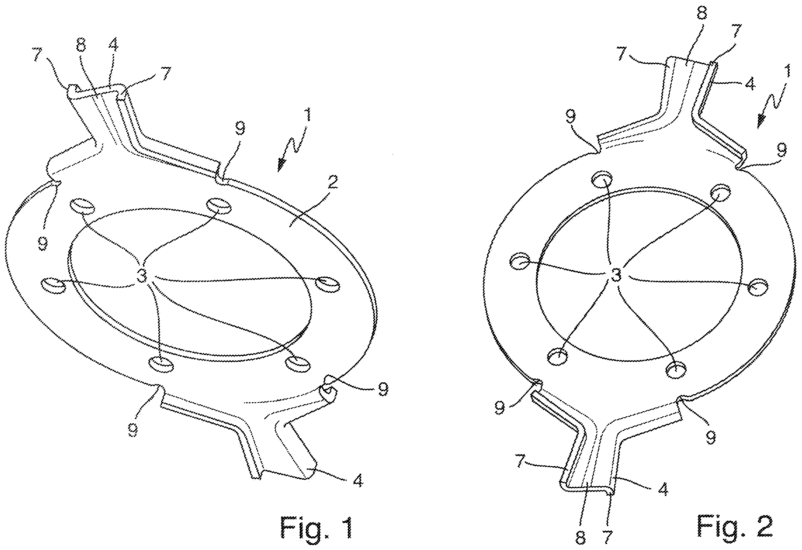

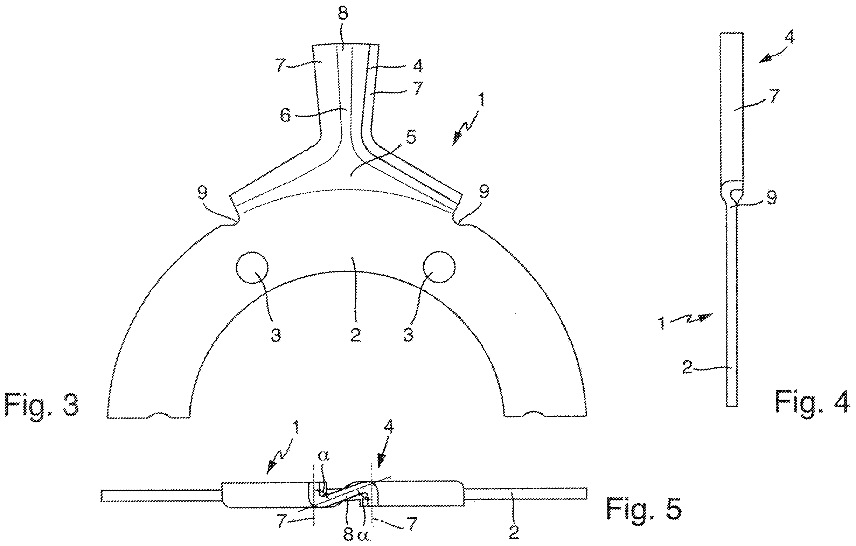

Die Figuren 1 bis 5 zeigen einen Flansch 1, insbesondere für einen Drehschwingungsdämpfer, in verschiedenen Ansichten. Der Flansch 1 weist einen ringförmigen Grundkörper 2 auf, welcher über den Umfang mit Öffnungen 3 versehen ist, um den Flansch 1 mit einem weiteren Bauteil beispielsweisen eines Drehschwingungsdämpfers zu verbinden. Dabei dienen die Öffnungen 3 beispielsweise einer Vernietung mit einem weiteren Bauteil eines Drehschwingungsdämpfers.

Von dem ringförmigen Grundkörper 2 des Flanschs 1 ragen nach radial außen Zungen 4 ab, wobei im Ausführungsbeispiel der Figuren 1 bis 5 zwei Zungen 4 von dem ringförmigen Grundkörper 2 nach radial außen abstehen, die um 180° zueinander versetzt zueinander von dem ringförmigen Grundkörper 2 abragen. Bei einem alternativen Ausführungsbeispiel kann die Anzahl der Zungen 4 auch variieren, wie insbesondere können drei, vier oder mehr Zungen 4 vorgesehen sein. Bei einer weiteren Gestaltung kann auch beispielsweise nur eine Zunge 4 vorgesehen sein.

Die von dem ringförmigen Grundkörper 2 nach radial außen abragenden Zungen 4 weisen im Schnitt eine im Wesentlichen Z-förmige Kontur auf.

Die Zunge 4 des Flanschs 1 weist einen ersten radial inneren Bereich 5 auf, welcher sich von radial innen nach radial außen ausgehend von dem ringförmigen Grundkörper 2 verjüngt. Weiterhin weist die Zunge 4 einen zweiten radial äußeren Bereich 6 auf, welcher ausgehend von dem ersten Bereich sich nach radial außen erweitert. Die Zunge 4 ist dabei derart ausgebildet, dass sie aus einem im Wesentlichen ebenen Streifen gebildet ist, bei welchem die beiden in Umfangsrichtung betrachtet gegenüber liegenden Kanten 7 gegensinnig abgebogen sind.

Dabei sind die Kanten 7 bevorzugt über die im Wesentlichen gesamte radiale Ausdehnung der Zunge abgebogen. Die Kanten 7 sind dabei derart abgebogen, dass sie in axialer Richtung ausgerichtet sind. Dies bedeutet, dass die Anlagefläche für eine Feder oder einen Kraftspeicher, welcher sich in Umfangsrichtung an die Zunge 4 anlegt, im Wesentlichen eben ist bzw. 90° zur Kraftrichtung des Kraftspeichers ausgerichtet ist. Zwischen den in axialer Richtung ausgerichteten Kanten 7 ist die Zunge 4 derart schräg ausgebildet, dass der im Wesentlichen ebene Bereich der Zunge 8 zwischen den Kanten 7 einen spitzen Winkel α mit den Kanten 7 bildet.

Die radiale Erstreckung der Zunge 4 ist derart gewählt, dass der erste Bereich 5 etwa die 0,25 bis 0,4-fache radiale Höhe der Zunge 4 einnimmt, wobei der sich erweiternde zweite Bereich 6 etwa die 0,6-fache bis 0,75-fache radiale Höhe der Zunge 4 einnimmt. Die Breite der Zunge in Umfangsrichtung betrachtet ist derart gewählt, dass der erste sich verjüngende Bereich 5 in der Breite etwa das 3-fache bis 5-fache der Breite der Zunge 4 an ihrer schmalsten Stelle einnimmt, wobei der sich erweiternde zweite Bereich 6 eine maximale Breite aufweist, welche etwa das 1,5-fache bis 2,5-fache der Breite der Zunge 4 an ihrer schmalsten Stelle beträgt.

Im Übergang zwischen dem ringförmigen Grundkörper 2 und der Zunge 4 weist der ringförmige Grundkörper 2 radial außen benachbart zur Zunge eine Ausklinkung 9 auf, welche bogenförmig ausgebildet ist.

### Bezugszeichenliste

- 1: Flansch
- 2: Ringförmiger Grundkörper
- 3: Öffnung
- 4: Zunge
- 5: Innerer Bereich
- 6: Äußerer Bereich
- 7: Kante
- 8: Ebener Bereich
- 9: Ausklinkung

## Patentansprüche

1. Flansch (1) mit einem ringförmigen Grundkörper (2) und nach radial außen abstehenden Zungen (4) zur Anlage an Kraftspeichern insbesondere von Drehschwingungsdämpfern, wobei die Kontur der Zungen (4) derart ist, dass sie im Schnitt Z-förmig ausgebildet ist, **dadurch gekennzeichnet, dass** die Z-förmige Gestalt einer Zunge (4) dadurch gebildet wird, dass die Zunge (4) aus einem im Wesentlichen ebenen Streifen gebildet wird, bei welchem seine beiden im Umfangsrichtung betrachtet gegenüberliegenden Kanten (7) gegensinnig abgebogen sind,

2. Flansch nach Anspruch 1, **dadurch gekennzeichnet, dass** die gegenüberliegenden Kanten (7) derart abgebogen sind, dass sie in axialer Richtung ausgerichtet sind.

3. Flansch nach einem der vorhergehenden Ansprüche 1 oder 2, **dadurch gekennzeichnet, dass** die Zunge (4) zwischen den beiden abgekanteten Kanten (7) derart schräg verläuft, dass zwischen der Ebene der Zunge (4) zwischen den beiden Kanten (7) und zumindest einer der Kanten (7) ein spitzer Winkel (α) vorliegt.

4. Flansch nach einem der vorhergehenden Ansprüche, **dadurch gekennzeichnet, dass** die Zunge (4) ausgehend von dem ringförmigen Grundkörper (2) nach radial außen einen ersten Bereich (5) aufweist, der sich verjüngt und einen zweiten Bereich (6) aufweist, der sich im Anschluss an den sich verjüngenden Bereich erweitert.

5. Flansch nach Anspruch 4, **dadurch gekennzeichnet, dass** der sich verjüngende erste Bereich (5) eine radiale Höhe aufweist, die im Wesentlichen zwischen dem 0,25 und 0,4 fachen der radialen Höhe der Zunge (4) beträgt.

6. Flansch nach Anspruch 4 oder 5, **dadurch gekennzeichnet, dass** der sich erweiternde zweite Bereich (6) eine radiale Höhe aufweist, die im Wesentlichen zwischen dem 0,6 und 0,75 fachen der radialen Höhe der Zunge (4) beträgt.

7. Flansch nach einem der Ansprüche 4 bis 6, **dadurch gekennzeichnet, dass** der erste sich verjüngende Bereich (5) eine maximale Breite aufweist, welche im Wesentlichen einem 3-fachen bis 5-fachen der Breite der Zunge (4) an ihrer schmalsten Stelle entspricht.

8. Flansch nach einem der Ansprüche 4 bis 7, **dadurch gekennzeichnet, dass** der zweite sich erweiternde Bereich (6) eine maximale Breite aufweist, welche im Wesentlichen einem 1,5-fachen bis 2,5-fachen der Breite der Zunge (4) an ihrer schmalsten Stelle entspricht.

9. Flansch nach einem der vorhergehenden Ansprüche, **dadurch gekennzeichnet, dass** die abgebogenen Kanten (7) sich über den ersten sich verjüngenden Bereich (5) und den zweiten sich erweiternden Bereich (6) erstrecken.

## Claims

1. Flange (1) having an annular main body (2) and tongues (4) which project radially to the outside for bearing against force accumulators, in particular, of torsional vibration dampers, the contour of the tongues (4) being such that it is of Z-shaped configuration in section, **characterized in that** the Z-shaped design of a tongue (4) is formed by virtue of the fact that the tongue (4) is formed from a substantially planar strip, in which its two edges (7) which lie opposite one another as viewed in the circumferential direction are bent away in opposite directions.

2. Flange according to Claim 1, **characterized in that** the edges (7) which lie opposite one another are bent away in such a way that they are oriented in the axial direction.

3. Flange according to either of the preceding Claims 1 and 2, **characterized in that** the tongue (4) runs obliquely between the two bent-away edges (7) in such a way that there is an acute angle (α) between the plane of the tongue (4) between the two edges (7) and at least one of the edges (7).

4. Flange according to one of the preceding claims, **characterized in that**, starting from the annular main body (2), the tongue (4) has a first region (5) radially to the outside, which first region (5) tapers and has a second region (6) which widens adjacently with respect to the tapering region.

5. Flange according to Claim 4, **characterized in that** the tapering first region (5) has a radial height which is substantially between 0.25 and 0.4 times the radial height of the tongue (4).

6. Flange according to Claim 4 or 5, **characterized in that** the widening second region (6) has a radial height which is substantially between 0.6 and 0.75 times the radial height of the tongue (4).

7. Flange according to one of Claims 4 to 6, **characterized in that** the first tapering region (5) has a maximum width which corresponds substantially to from 3 times to 5 times the width of the tongue (4) at its narrowest point.

8. Flange according to one of Claims 4 to 7, **characterized in that** the second widening region (6) has a maximum width which corresponds substantially to from 1.5 times to 2.5 times the width of the tongue (4) at its narrowest point.

9. Flange according to one of the preceding claims, **characterized in that** the bent-away edges (7) extend over the first tapering region (5) and the second widening region (6).

## Revendications

1. Bride (1) présentant un corps de base annulaire (2) et des pattes (4) débordant radialement vers l'extérieur et destinées à être placées sur des accumulateurs de force, en particulier d'amortisseurs de vibrations rotatives, le contour des pattes (4) étant sélectionné de telle sorte qu'il présente en coupe la forme d'un Z,
**caractérisée en ce que**
la forme de Z d'une patte (4) est formée de telle sorte que la patte (4) est formée d'un ruban essentiellement plan dont les deux bordures (7) opposées dans la direction périphérique sont rabattues dans des sens opposés.

2. Bride selon la revendication 1, **caractérisée en ce que** les bordures opposées (7) sont rabattues de manière à être alignées dans la direction axiale.

3. Bride selon l'une des revendications 1 ou 2 qui précèdent, **caractérisée en ce que** la patte (4) s'étend obliquement entre les deux bordures rabattues (7) de telle sorte qu'un angle (α) aigu soit formé entre le plan de la patte (4) entre les deux bordures (7) et au moins l'une des bordures (7).

4. Bride selon l'une des revendications précédentes, **caractérisée en ce que** partant du corps de base annulaire (2) et dans la direction allant radialement vers l'extérieur, la patte (4) présente une première partie (5) qui se rétrécit et une deuxième partie (6) qui s'évase à la suite de la partie qui se rétrécit.

5. Bride selon la revendication 4, **caractérisée en ce que** la première partie (5) qui se rétrécit présente une hauteur radiale qui représente essentiellement entre 0,25 et 0,4 fois la hauteur radiale de la patte (4).

6. Bride selon les revendications 4 ou 5, **caractérisée en ce que** la deuxième partie évasée (6) présente une hauteur radiale qui représente essentiellement entre 0,6 et 0,75 fois la hauteur radiale de la patte (4).

7. Bride selon les revendications 4 à 6, **caractérisée en ce que** la première partie (5) qui se rétrécit présente une largeur maximale qui correspond essentiellement à 3 à 5 fois la largeur de la patte (4) en son emplacement le plus étroit.

8. Bride selon les revendications 4 à 7, **caractérisée en ce que** la deuxième partie (6) qui s'évase présente une largeur maximale qui représente essentiellement entre 1,5 fois et 2,5 fois la largeur de la patte (4) en son emplacement le plus étroit.

9. Bride selon l'une des revendications précédentes, **caractérisée en ce que** les bordures relatives (7) s'étendent sur la première partie (5) qui se rétrécit et sur la deuxième partie (6) qui s'évase.
